# EUROPÄISCHE PATENTSCHRIFT

(11) **EP 0 527 311 B1**
(45) Veröffentlichungstag und Bekanntmachung des Hinweises auf die Patenterteilung: **15.05.1996**
(21) Anmeldenummer: 92110105.1
(22) Anmeldetag: 16.06.1992
(51) Int. Cl.: H02G 9/06, H02G 1/08, H02G 3/04

(54) **Kabelführungseinrichtung mit zumindest einem Kabelführungsrohr**
Cable guiding device with at least one cable guiding pipe
Dispositif de guidage de câble avec au moins un tuyau de guidage de câble

(30) Priorität: 20.07.1991 DE 4124156
(43) Veröffentlichungstag der Anmeldung: 17.02.1993
(73) Patentinhaber: Dipl.-Ing. Dr. Ernst Vogelsang GmbH & Co. KG, D-45699 Herten (DE)
(72) Erfinder: Vogelsang, Horst, W-4352 Herten/Westf. (DE)
(74) Vertreter: Andrejewski, Walter, Dr.

(56) Entgegenhaltungen:
- EP-A- 0 414 514
- DE-A- 1 808 271
- DE-A- 3 529 541
- DE-U- 9 011 565
- DE-U- 9 014 571

## Beschreibung

Die Erfindung betrifft eine Kabelführungseinrichtung mit zumindest einem Kabelführungsrohr aus thermoplastischem Kunststoff, welches einen im Querschnitt runden Kabelführungskanal und eine Kanalinnenwand mit zueinander parallel verlaufenden Gleitrippen besitzt, die Gleitbereiche mit schraubenwendelförmig geführten Gleitrippenabschniten mit gegenläufigem Wendelsinn aufweisen, welche in einer Abwicklung der Kanalinnenwand als Wellenzug verlaufen. - Der Begriff Kabelführungseinrichtung bezeichnet z.B. einzelne Kabelführungsrohre (vgl. DE 35 29 541 A1), aber auch Kabelführungsrohraggregate (vgl. DE 32 17 401 A1). Das Kabelführungsrohr bzw. die Kabelführungsrohre der Kabelführungseinrichtung nehmen einzelne Kabel oder Kabelbündel auf, die schiebend oder ziehend eingeführt werden müssen. Es versteht sich, daß Kabel die üblichen Kabel der Nachrichtentechnik, insbesondere die im Postwesen üblichen Kabel, aber auch Energieversorgungskabel meint.

Bei der bekannten Kabelführungseinrichtung, von der die Erfindung ausgeht (DE-GM 90 14 571), ist die Wellenlänge des Wellenzuges frei wählbar, Das gilt auch für die Amplitude der Wellen. Nicht ausgeschlossen ist es, die Gleitrippen in mehreren vollen Windungen einer Schraubenwendel alternierend linksdrehend und rechtsdrehend anzuordnen. Während bei anderen bekannten Kabelführungseinrichtungen und Kabelführungsrohren mit über die gesamte Länge der Kabelführungsrohre schraubenwendelförmig mit gleichem Drehsinn geführten Gleitrippen (DE 35 29 541 A1) beim Einziehen oder Einschieben eines Kabels in den Kabelführungskanal störende tordierende Kräfte auftreten, die auch bremsend wirken, lassen sich bei den vorstehend beschriebenen bekannten Maßnahmen mit als Wellenzug geführten Gleitrippen (DE-GM 90 14 571) die tordierenden Kräfte weitgehend vermeiden. Nichtsdestoweniger bedürfen die linearen Einziehkräfte oder Einschubkräfte noch der Reduzierung.

Der Erfindung liegt die Aufgabe zugrunde, eine Kabelführungseinrichtung zu schaffen, bei der nicht nur die störenden Einflüsse der tordierenden Kräfte nicht mehr in Kauf genommen werden müssen, sondern darüber hinaus auch die vorstehend beschriebenen linearen Einziehkräfte minimiert werden können.

Zur Lösung dieser Aufgabe lehrt die Erfindung, daß die Wellenlänge des Wellenzuges im Bereich von 80 cm bis 160 cm liegt und die Wellen eine Amplitude aufweisen, die kleiner ist, als es einem Viertel des Innenumfangs des Kabelführungskanales entspricht.

Die Lehre der Erfindung läßt sich im Detail auf verschiedene Weise verwirklichen. So besitzen die Gleitrippen zweckmäßigerweise eine Rippenhöhe von mehr als 0,1 mm, vorzugsweise von 0,3 bis 0,5 mm. Zwischen den Gleitrippen befinden sich selbstverständlich Vertiefungen oder Rillen. Die Gleitrippen können eingeformt oder aufgebracht sein. Nach bevorzugter Ausführungsform der Erfindung sind zwischen den Gleitrippen Rillen angeordnet, deren Rillenquerschnitt etwa dem Querschnitt der Gleitrippen entspricht. Im Rahmen der Erfindung beträgt die Wellenlänge des Wellenzuges der Gleitrippen vorzugsweise etwa 100 cm. Die Amplitude des Wellenzuges der Gleitrippen liegt vorzugsweise im Bereich von einem Achtel bis einem Viertel des Innenumfanges des Kabelführungskanales.

Verwirklicht man die beschriebenen Merkmale, so kommt man bei allen üblichen Werkstoffen für das Kabelführungsrohr sowie bei allen üblichen Werkstoffen für das Kabel bzw. das Kabelbündel, im Vergleich zu den bekannten Ausführungsformen, zu einer beachtlichen Reduzierung der linearen Einziehkraft. Das gilt insbesondere, wenn der Duchmesser des Kabelführungskanales im Bereich von 30 bis 70 mm, vorzugsweise bei etwa 50 mm liegt. Der Durchmesser kann aber auch größer sein, z.B. 110 mm ausmachen. Dazu gehören regelmäßig Kabeldurchmesser oder Kabelbündeldurchmesser im Bereich von 50 mm. Durch Versuche, bei denen die Wellenlänge und die Amplitude des Wellenzuges der Gleitrippen verändert wird, können leicht für jede Durchmesserpaarung vom Durchmesser des Kabelführungskanales einerseits und einzuziehendem Kabel bzw. Kabelbündel andererseits optimale Minimierungen eingestellt werden. - Die für die Lehre der Erfindung wesentlichen Angaben über die Wellenlänge des Wellenzuges und die Amplitude führen in allen Fällen im Rahmen der üblichen Kabeldurchmesser und Kabelführungskanaldurchmesser zu beachtlich reduzierten Einziehkräften oder Einschubkräften. Dabei ist im Rahmen der Versuche darauf zu achten, daß der Winkel der Gleitrippen zur Rohrachse nicht zu groß wird, weil dann, wenn dieser Winkel zu groß ist, und die Gleitrippen stark schräg zum Kabel verlaufen, an den Gleitrippen eine bremsende Komponente auftritt. Die Wellenlänge soll daher bei den üblichen Durchmessern möglichst groß, die Amplitude soll möglichst klein sein.

Im folgenden wird die Erfindung anhand einer lediglich ein Ausführungsbeispiel darstellenden Zeichnung ausführlicher erläutert. Es zeigen in schematischer Darstellung
- Fig. 1: einen Querschnitt einer Kabelführungseinrichtung,
- Fig. 2: eine Seitenansicht des Gegenstandes der Fig. 1, ausschnittsweise und teilweise aufgebrochen,
- Fig. 3: den wesentlich vergrößerten Ausschnitt A aus dem Gegenstand der Fig. 1, und
- Fig. 4: in einer Abwicklung eines Kabelführungsrohrabschnittes die besondere Anordnung der Gleitrippen.

Die in den Figuren dargestellte Kabelführungseinrichtung 1 mag ein Kabelführungsrohr 2 oder deren mehrere aufweisen. Gezeichnet wurde ein Kabelführungsrohr 2. Angedeutet wurden angeformte Stege 3, an die weitere Kabelführungsrohre angeschlossen sein könnten. Die Kabelführungsrohre 2 können außen auch einen runden Querschnitt aufweisen. Sie bestehen aus thermoplastischem Kunststoff.

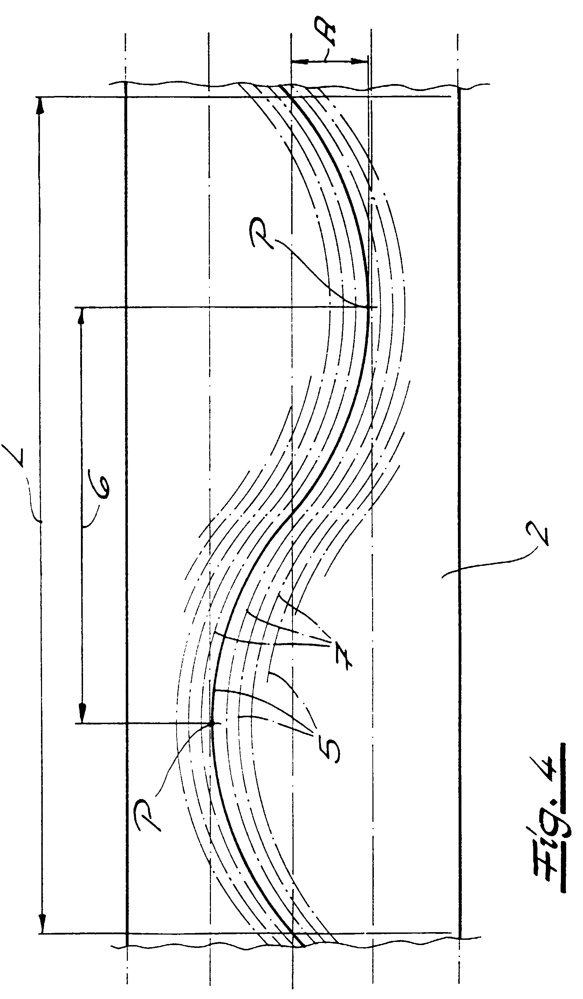

Im Ausführungsbeispiel weist das Kabelführungsrohr einen im Querschnitt runden Kabelführungskanal 4 und eine Kanalinnenwand mit zueinander parallel verlaufenden Gleitrippen 5 auf. Betrachtet man die Fig. 4, die eine Abwicklung der Kanalinnenwand des Kabelführungsrohres 2 darstellt, so erkennt man, daß die Gleitrippen 5, bezogen auf diese Abwicklung, als Wellenzüge geführt sind. Die Wellenlänge L des Wellenzuges beträgt im Ausführungsbeispiel etwa 100 cm. Sie kann im Bereich von 80 cm bis 160 cm liegen. Man erkennt, daß bei der gezeichneten Wellenlänge L der Abstand zwischen zwei Umkehrpunkten P in der Steigung etwa 50 cm beträgt, wie der Doppelpfeil 6 andeutet. Die Abwicklung entspricht in ihrer Breite dem Umfang des Kabelführungskanales 4. Man erkennt in der Fig. 4, daß die Amplitude A des Wellenzuges kleiner ist als ein Viertel des Innenumfanges des Kabelführungskanales 4. Normiert man den Radius des Kabelführungskanales zu eins, so kann der Umfang im Winkelmaß angegeben werden. Der vollständige Umfang beträgt 360°, die Amplitude A des Wellenzuges maximal 90°.

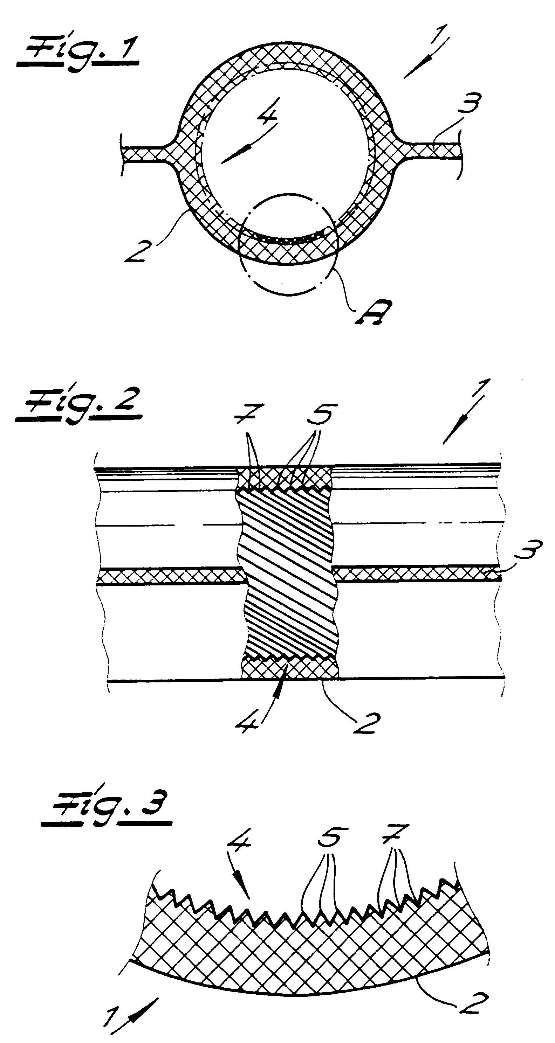

Die Gleitrippen 5 besitzen eine Rippenhöhe von mehr als 0,1 mm, vorzugsweise eine Rippenhöhe von 0,3 bis 0,5 mm. Dazu wird insbesondere auf die Fig. 1 und 3 verwiesen. Zwischen den Gleitrippen 5 sind Rillen 7 angeordnet, deren Rillenquerschnitt im Ausführungsbeispiel etwa dem Querschnitt der Gleitrippen 5 entspricht. Die Amplitude A könnte auch kleiner sein, als es in der Fig. 4 gezeichnet wurde, beispielsweise im Bereich von einem Achtel bis einem Viertel des Innenumfanges des Kabelführungskanales 4 liegen. Bezüglich der Durchmesserverhältnisse wird auf die Patentansprüche 6 und 7 verwiesen.

## Patentansprüche

1. Kabelführungseinrichtung mit zumindest einem Kabelführungsrohr aus thermoplastischem Kunststoff, welches einen im Querschnitt runden Kabelführungskanal und eine Kanalinnenwand mit zueinander parallel verlaufenden Gleitrippen besitzt, die Gleitbereiche mit schraubenwendelförmig geführten Gleitrippenabschnitten mit gegenläufigem Wendelsinn aufweisen, welche in einer Abwicklung der Kanalinnenwand als Wellenzug verlaufen, **dadurch gekennzeichnet,** daß die Wellenlänge (L) des Wellenzuges im Bereich von 80 cm bis 160 cm liegt und die Wellen eine Amplitude (A) aufweisen, die kleiner ist, als es einem Viertel des Innenumfanges des Kabelführungskanales (4) entspricht.

2. Kabelführungseinrichtung nach Anspruch 1, dadurch gekennzeichnet, daß die Gleitrippen (5) eine Rippenhöhe von mehr als 0,1 mm aufweisen, vorzugsweise von 0,3 bis 0,5 mm.

3. Kabelführungseinrichtung nach einem der Ansprüche 1 oder 2, dadurch gekennzeichnet, daß zwischen den Gleitrippen (5) Rillen (7) angeordnet sind, deren Rillenquerschnitt etwa dem Querschnitt der Gleitrippen (5) entspricht.

4. Kabelführungseinrichtung nach einem der Ansprüche 1 bis 3, dadurch gekennzeichnet, daß die Wellenlänge (L) des Wellenzuges der Gleitrippen (5) etwa 100 cm beträgt.

5. Kabelführungseinrichtung nach einem der Ansprüche 1 bis 4, dadurch gekennzeichnet, daß die Amplitude (A) des Wellenzuges der Gleitrippen (5) im Bereich von einem Achtel bis einem Viertel des Innenumfanges des Kabelkanales (4) liegt.

6. Kabelführungseinrichtung nach einem der Ansprüche 1 bis 5, dadurch gekennzeichnet, daß der Durchmesser des Kabelführungskanales (4) im Bereich von 30 bis 70 mm liegt.

7. Kabelführungseinrichtung nach Anspruch 6, dadurch gekennzeichnet, daß der Durchmesser des Kabelführungskanales (4) etwa 50 mm ausmacht.

## Claims

1. A cable guide element with at least one cable conduit made of thermoplastic plastic, containing a cable guide channel with a round cross section and an inner conduit wall with slide ribs arranged parallel to one another, containing slide areas with helical slide rib sections of opposing helical formation which are arranged as a wave section on the surface of the inner conduit wall, **characterised** in that the wave length (L) of the wave section is between 80 to 160 cm and that the waves have an amplitude (A) of less than a quarter of the internal circumference of the cable guide channel (4).

2. A cable guide element according to claim 1, **characterised** in that the slide ribs (5) have a rib height in excess of 0.1 mm and preferably of 0.3 to 0.5 mm.

3. A cable guide element according to claims 1 or 2, **characterised** in that grooves (7) are arranged between said slide ribs (5) and that the cross section of said grooves correspond approximately to the cross section of the slide ribs (5).

4. A cable guide element according to claims 1 to 3, **characterised** in that the wave length (L) of the wave section of the slide ribs (5) is approx. 100 cm.

5. A cable guide element according to one of the claims 1 to 4, **characterised** in that the amplitude (A) of the wave section of the slide ribs (5) is between one eighths and one quarter of the inner circumference of the cable guide channel (4).

6. A cable guide element according to claims 1 to 5, **characterised** in that the diameter of the cable guide channel (4) is between 30 to 70 mm.

7. A cable guide element according to claim 6, **characterised** in that the diameter of the cable guide channel (4) is approx. 50 mm.

## Revendications

1. Dispositif de guidage de câbles avec au moins une gaine pour câbles en thermoplastique, qui possède un conduit de guidage de section ronde pour câbles et une paroi intérieure de conduit avec des nervures de glissement disposées parallèlement entre elles, qui présentent des zones de glissement avec des sections de nervures de glissement à agencement hélicoïdal avec sens hélicoïdal opposé, qui sont disposées dans un développement de la paroi intérieure du conduit comme train d'ondes, **caractérisé par le fait** que la longueur d'onde (L) du train d'ondes est comprise entre 80 cm et 160 cm et que les ondes présentent une amplitude (A) qui est inférieure à un quart de la circonférence intérieure du conduit de guidage de câbles (4).

2. Dispositif de guidage de câbles selon la revendication 1, **caractérisé par le fait** que les nervures de glissement (5) présentent une hauteur de nervure de plus de 0,1 mm, de préférence de 0,3 à 0,5 mm.

3. Dispositif de guidage de câbles selon une des revendications 1 ou 2, **caractérisé par le fait** qu'entre les nervures de glissement (5) sont disposées des rainures (7) dont la section de rainure correspond environ à la section des nervures de glissement (5).

4. Dispositif de guidage de câbles selon une des revendications 1 à 3, **caractérisé par le fait** que la longueur d'onde (L) du train d'ondes des nervures de glissement (5) est d'environ 100 cm.

5. Dispositif de guidage de câbles selon une des revendications 1 à 4, **caractérisé par** le fait que l'amplitude (A) du train d'ondes des nervures de glissement (5) est comprise entre un huitième et un quart de la circonférence intérieure du conduit pour câbles (4).

6. Dispositif de guidage de câbles selon une des revendications 1 à 5, **caractérisé par le fait** que le diamètre du conduit de guidage de câbles (4) est compris entre 30 et 70 mm.

7. Dispositif de guidage de câbles selon la revendication 6, **caractérisé par le fait** que le diamètre du conduit de guidage de câbles (4) est d'environ 50 mm.
